(19) Europäisches Patentamt
European Patent Office
Office européen des brevets

(11) **EP 4 779 898 A1**

(12) **EUROPEAN PATENT APPLICATION**
published in accordance with Art. 153(4) EPC

(43) Date of publication:
**22.07.2026  Bulletin 2026/30**

(21) Application number: **24864762.0**

(22) Date of filing: **13.09.2024**

(51) International Patent Classification (IPC):
**H04B 7/185** (2006.01)

(52) Cooperative Patent Classification (CPC):
**H04B 7/185; H04W 72/1263**

(86) International application number:
**PCT/CN2024/118927**

(87) International publication number:
**WO 2025/056047 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023  CN 202311196958**

(71) Applicants:
• **CHINA MOBILE COMMUNICATION CO., LTD RESEARCH INSTITUTE**
**Beijing 100053 (CN)**

• **CHINA MOBILE COMMUNICATIONS GROUP CO., LTD.**
**Beijing 100032 (CN)**

(72) Inventors:
• **LIU, Yuzhen**
**Beijing 100053 (CN)**
• **CHAI, Li**
**Beijing 100053 (CN)**

(74) Representative: **Herrero & Asociados, S.L.**
**Edificio Aqua - Calle Agustín de Foxá, 4-10, 2oA**
**28036 Madrid (ES)**

(54) **INFORMATION IDENTIFICATION METHOD, APPARATUS, DEVICE AND STORAGE MEDIUM**

(57)    Provided in the embodiments of the present application are an information identification method, an apparatus, a device and a storage medium. The method comprises: a network-side node transmits at least one of the following information for a terminal to identify information from different satellites: first indication information, the first indication information being used for indicating whether the terminal is in a PCI unchanged scenario, and/or time information about being in a PCI changed or unchanged scenario, and/or one or more divided geographic regions correspond to one PCI; first configuration information, the first configuration information being used for indicating a corresponding relationship between SSB configurations and satellites and/or a corresponding relationship between the SSB configurations and satellite beams; second configuration information, the second configuration information being used for indicating, when the same SSB configuration corresponds to different satellites, related information of a SSB transmitted by a satellite; and first auxiliary information, the first auxiliary information being used for indicating information related to satellites connected to the same ground base station.

```
start
  │
  ▼
transmitting at least one of following information for
identifying information from different satellites by a
terminal: first indication information, configured to indicate:
whether the terminal is in a PCI unchanged scenario, and/or
time information in a PCI changed or unchanged scenario,
and/or that one or more divided geographic regions
correspond to one PCI; first configuration information,
configured to indicate a correspondence between SSB
configurations and the satellites and/or a correspondence
between the SSB configurations and satellite beams; second
configuration information, configured to indicate, in a case
where a same SSB configuration corresponds to the different
satellites, SSB related information transmitted by the
satellites; or first auxiliary information, configured to
indicate satellite related information connected to a same
ground base station                                        ── 101
  │
  ▼
end
```

FIG. 1

# Description

## CROSS-REFERENCE TO RELATED APPLICATIONS

The present application claims priority to Chinese Patent Application No. 202311196958.8, filed on September 15, 2023, which is herein incorporated by reference in its entirety.

## TECHNICAL FIELD

The present disclosure relates to the field of communication technologies, and in particular to an information identification method, an apparatus, a device, and a storage medium.

## BACKGROUND

In Non-Terrestrial Network (NTN) technology, the current Physical Cell Identifier (PCI) unchanged scheme is currently only supported in scenarios of quasi-earth-fixed cell hard satellite switch (where satellite coverage areas do not overlap during switching) under a transparent forwarding architecture. The applicability of this scheme to scenarios such as soft satellite switch (i.e., where satellite coverage areas overlap during switching), and/or dynamic (earth moving) scenarios, and/or dual connectivity scenarios, and/or regenerative architectures remains to be urgently addressed.

## SUMMARY

In view of the above, embodiments of the present disclosure are expected to provide an information identification method, an apparatus, a device, and a storage medium.

The technical solutions of the embodiments of the present disclosure are implemented as follows:

The embodiments of the present disclosure provide an information identification method applied to a network-side node. The method includes:
transmitting at least one of following information for identifying information from different satellites by a terminal:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;
second configuration information, configured to indicate, in a case where a same SSB configuration corresponds to the different satellites, SSB related information transmitted by the satellites; or
first auxiliary information, configured to indicate satellite related information connected to a same ground base station.

In the embodiments of the present disclosure, the first indication information may include at least one of following information:

an indication that the terminal is in the PCI unchanged scenario; or
a valid duration during which the terminal is in the PCI unchanged scenario.

In the embodiments of the present disclosure, the second configuration information may include a correspondence between the same SSB configuration and the different satellites; and the second configuration information may further include at least one of following information:

a start time at which each of the satellites transmits a SSB;
a valid duration of the SSB;
a beam direction for transmitting the SSB; or
a configuration of an activated Bandwidth Part (BWP).

In the embodiments of the present disclosure, the first configuration information may include at least one of following information:

quantity information of the satellites connected to the same ground base station;
ephemeris information of the satellites connected to the same ground base station;
time information of the satellites connected to the same ground base station; or
beam information of the satellites connected to the same ground base station.

In the embodiments of the present disclosure, in a case where a number of terminals supporting a PCI unchanged function within a coverage area where the PCI remains unchanged is less than a threshold, the method may further include:

transmitting system information; where the system information carries a virtual PCI, and the virtual PCI is configured for identifying different satellites corresponding to a same PCI by the terminals not supporting the PCI unchanged function;
where the same PCI corresponds to a plurality of different virtual PCIs, and the plurality of different virtual PCIs correspond to the different satellites.

In the embodiments of the present disclosure, in a case where one or more divided geographic regions correspond to one PCI, the method may further include: transmitting a Primary Synchronization Signal (PSS) and a Secondary Synchronization Signal (SSS) corresponding to the divided geographic regions, for determining the PCI corresponding to the divided geographical regions by the terminal.

In the embodiments of the present disclosure, in a case where the network-side node is a Central Unit (CU), the method may further include:

controlling, by the CU, a same key; where a plurality of Distributed Units (DUs) connected to the same CU cover a corresponding same PCI; and
transmitting, by a first DU through forwarding via the CU or through a first interface configured between the DUs, a preset number of data-packet related information and stored data-packet information last sent by the first DU to a second DU;
where the first DU is a DU currently providing service for the terminal, and the second DU is a next DU to provide service for the terminal.

The embodiments of the present disclosure further provide an information identification method applied to a terminal. The method includes:
receiving at least one of following information, and identifying information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;
second configuration information, configured to indicate, in a case where a same SSB configuration corresponds to the different satellites, SSB related information transmitted by the satellites; or
first auxiliary information, configured to indicate satellite related information connected to a same ground base station.

In the embodiments of the present disclosure, in a case where the terminal does not support a PCI unchanged function within a coverage area where the PCI remains unchanged, the method may further include:

receiving system information; where the system information carries a virtual PCI, and the virtual PCI is configured for identifying different satellites corresponding to a same PCI by the terminal not supporting the PCI unchanged function;
where the same PCI corresponds to a plurality of different virtual PCIs, and the plurality of different virtual PCIs correspond to the different satellites.

In the embodiments of the present disclosure, in a case where the terminal does not support a PCI unchanged function within a coverage area where the PCI remains unchanged, the method may further include:

in a case where the terminal loses communication connection with a first satellite, attempting to restore the connection through Beam Failure Recovery (BFR); and
detecting a second satellite corresponding to a same PCI as the first satellite, and re-accessing a network by the second satellite.

In the embodiments of the present disclosure, in a case where the terminal does not support a PCI unchanged function within a coverage area where the PCI remains unchanged, the method may further include:

performing, by the terminal, a measurement operation after the terminal loses communication connection with a first satellite or before a service stop time of the first satellite times out; and
accessing, through cell selection or cell reselection, a second satellite corresponding to a same PCI as the first satellite.

In the embodiments of the present disclosure, in a case where the terminal does not support a PCI unchanged function within a coverage area where the PCI remains unchanged, the method may further include:
in a case where the terminal loses communication connection with a first satellite, accessing, by an intra-cell handover, a network corresponding to a second satellite that corresponds to a same PCI as the first satellite.

The embodiments of the present disclosure further provide a network node. The network node includes a first communication interface and a first processor;
where the first communication interface is configured to transmit at least one of following information for identifying information from different satellites by a terminal:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

The embodiments of the present disclosure further provide a terminal. The terminal includes a second communication interface and a second processor; where the second communication interface is configured to receive at least one of following information and identify information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;

first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

The embodiments of the present disclosure further provide a network node. The network node includes a first processor and a first memory configured to store a computer program executable on the processor; where the first processor is configured to, when executing the computer program, perform operations of the above method.

The embodiments of the present disclosure further provide a terminal. The terminal includes a second processor and a second memory configured to store a computer program executable on the processor; where the second processor is configured to, when executing the computer program, perform operations of the above methods.

The embodiments of the present disclosure further provide a storage medium, storing a computer program. When the computer program is executed by a processor, the computer program implements operations of the above method.

The embodiments of the present disclosure provide an information identification method, an apparatus, a device, and a storage medium. A network-side node may transmit at least one of following information for identifying information from different satellites by a terminal: first indication information, configured to indicate: whether the terminal is in a PCI unchanged scenario, and/or time information in a PCI changed or unchanged scenario, and/or that one or more divided geographic regions correspond to one PCI; first configuration information, configured to indicate a correspondence between SSB configurations and the satellites and/or a correspondence between the SSB configurations and satellite beams; second configuration information, configured to indicate, in a case where a same SSB configuration corresponds to the different satellites, SSB related information transmitted by the satellites; or first auxiliary information, configured to indicate satellite related information connected to a same ground base station. The embodiments of the present disclosure may implement a PCI-unchanged scheme in a plurality of scenarios during NTN communication through different information sent by the network-side node.

## BRIEF DESCRIPTION OF THE DRAWINGS

FIG. 1 is a first schematic flowchart of an information identification method according to embodiments of the present disclosure.

FIG. 2 is a second schematic flowchart of an information identification method according to embodiments of the present disclosure.

FIG. 3 is a first structural schematic diagram of an information identification apparatus according to embodiments of the present disclosure.

FIG. 4 is a second structural schematic diagram of an information identification apparatus according to embodiments of the present disclosure.

FIG. 5 is a structural schematic diagram of a network node according to embodiments of the present disclosure.

FIG. 6 is a structural schematic diagram of a terminal according to embodiments of the present disclosure.

## DETAILED DESCRIPTION

The present disclosure will be described below in conjunction with the accompanying drawings and embodiments. It is to be understood that the specific embodiments described herein are presented solely to illustrate the relevant application and are not intended to limit the present disclosure. In addition, it should be noted that, for the convenience of description, only the parts related to the relevant application are shown in the accompanying drawings. It should be noted that, in the case of no conflict, embodiments in the present disclosure and features in the embodiments may be combined with each other. The present disclosure will be described in detail below with reference to the accompanying drawings and in conjunction with embodiments.

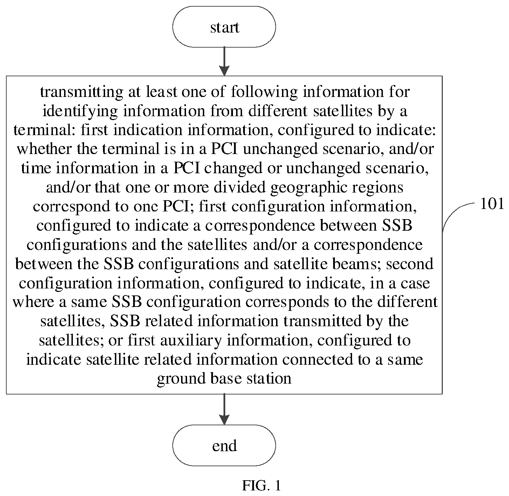

As shown in FIG. 1, the embodiments of the present disclosure provide an information identification method applied to a network-side node. The method includes:

The operation 101: transmitting at least one of following information for identifying information from different satellites by a terminal:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;

first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

In practical applications, the terminal may be referred to as a User Equipment (UE) or simply as a user. The network-side node may include any of the following: a base station, a satellite, a Central Unit (CU), or a Distributed Unit (DU). The embodiments of the present disclosure are applicable to PCI unchanged schemes in various scenarios (e.g., transparent forwarding architecture scenarios and regenerative architecture scenarios).

In some embodiments of the present disclosure, the first indication information may include at least one of following information:

an indication that the terminal is in the PCI unchanged scenario; or

a valid duration during which the terminal is in the PCI unchanged scenario.

In practical applications, for a transparent forwarding architecture, the terminal may simultaneously perceive a plurality of satellites or maintain simultaneous communication connections with the plurality of satellites (where the plurality of satellites may be connected to the same base station on the ground). The terminal may be in a PCI unchanged scenario: the network-side node may send first indication information to the terminal. In some embodiments, the valid duration during which the terminal is in the PCI unchanged scenario may be indicated in any one of following ways: a start time and duration length of the PCI changed or unchanged scenario, an absolute start and end time (Coordinated Universal Time (UTC) t1, UTC t2) of the PCI changed or unchanged scenario, or a relative time of the PCI changed or unchanged scenario.

Upon receiving the first indication information, the terminal may determine the operations corresponding to the PCI changed or unchanged scenario to be subsequently performed. For example, if it is a PCI unchanged scenario, the terminal needs to perform synchronization with a new satellite in a timely manner instead of performing a handover. If it is a PCI changed scenario, the terminal needs to execute a handover procedure. The specific synchronization or handover procedures are related art and will not be described in detail herein.

In some embodiments, in practical applications, the network-side node may transmit the first configuration information. The first configuration information is configured to indicate a correspondence between Synchronization Signal and Physical Broadcast Channel (PBCH) Block (SSB) configurations and the satellites and/or a correspondence between the SSB configurations and satellite beams. In some embodiments, different SSB configurations (including one or more SSB indexes) may match different satellites or different beams. In some embodiments, the association between the SSB configurations and the satellite/beam configurations may be as follows: for example, satellite ID1 and/or beam1 may correspond to SSB configuration 1 (set1), satellite ID2 and/or beam2 may correspond to SSB set2, and so on.

After receiving the correspondence between the SSB configurations (sets) and satellites or the configuration association between the SSB configurations (sets) and beams in the above-mentioned first configuration information, the terminal may receive network-side information by using the corresponding SSB configurations under the coverage of different satellites or beams.

In some embodiments of the present disclosure, the second configuration information may include a correspondence between the same SSB configuration and the different satellites. The second configuration information may further include at least one of following information:

a start time at which each of the satellites transmits a SSB;

a valid duration of the SSB;

a beam direction for transmitting the SSB; or

a configuration of an activated Bandwidth Part (BWP).

In practical applications, the network-side node may configure, in the second configuration information, the same SSB configuration to correspond to different satellites. The network-side time-division may schedule different satellites to transmit the SSB. The network-side node may further configure at least one of following information for the terminal: the start time at which each of the satellites transmits (broadcasts) the SSB (configured to distinguish satellites in service, to be arrived, and to be departed), the valid duration of the SSB (configured to distinguish satellites in service, to be arrived, and to be departed), the beam direction for transmitting the SSB, or the activated BWP configuration (configured for detecting the SSB on different activated BWPs by the terminal).

After receiving the above-mentioned second configuration information, the terminal may receive, within the coverage range of different satellites or beams, the network-side information by using the same SSB configuration (set) according to the corresponding time information (the start time at which each of the satellites transmits the SSB and/or the valid duration of the SSB).

In some embodiments of the present disclosure, the first configuration information may include at least one of following information:

quantity information of the satellites connected to the same ground base station;
ephemeris information of the satellites connected to the same ground base station;
time information of the satellites connected to the same ground base station; or
beam information of the satellites connected to the same ground base station.

In practical applications, the network-side node (e.g., a base station) may transmit (broadcast or multicast) the first configuration information. The first configuration information may include at least one of following information: the quantity information of the satellites connected to the same ground base station, the ephemeris information of the satellites connected to the same ground base station, the time information of the satellites connected to the same ground base station, or the beam information of the satellites connected to the same ground base station. In some embodiments, the time information of the satellites may include at least one of the following: an epochTime, a satellite service start time, or a satellite service stop time. The beam information of the satellites may include at least one of following information: a beam coverage radius, a variation in the coverage radius relative to the previous satellite beam, beam angle (e.g., elevation angle at the UE side or gateway side), or a beam angle variation.

According to the first auxiliary information, the terminal may implicitly obtain an approximate duration of being in the PCI changed or unchanged scenario (by using the quantity information of the satellites, the ephemeris information of the satellites, the time related information, and the beam information). The terminal may timely access a new satellite to obtain services (by using the time information). The terminal may also promptly adjust the beam reception direction (by using the beam-angle related information).

In some embodiments of the present disclosure, in a case where a number of terminals supporting a PCI unchanged function within a coverage area where the PCI remains unchanged is less than a threshold, the method may further include:

transmitting system information; where the system information carries a virtual PCI, and the virtual PCI is configured for identifying different satellites corresponding to a same PCI by the terminals not supporting the PCI unchanged function;
where the same PCI corresponds to a plurality of different virtual PCIs, and the plurality of different virtual PCIs correspond to the different satellites.

It should be noted that, the system information may further include the first indication information, the first configuration information, the second configuration information, the first auxiliary information, etc. The embodiments of the present disclosure may introduce the virtual PCI into the system information. For example, vPCI 1 corresponds to satellite 1 and vPCI 2 corresponds to satellite 2, which may be configured for distinguishing different satellites corresponding to the same actual PCI by a UE not supporting the PCI unchanged function.

In practical applications, the network side may determine whether to introduce the virtual PCI based on reporting of UE capability. If the number of UEs supporting the PCI unchanged function exceeds a certain threshold, the network side may indicate that the terminal is in the PCI unchanged scenario through the first indication information. Otherwise, the network side may indicate that the terminal is in the PCI changed scenario. For the latter case, the virtual PCI may be introduced into the system information. For example, vPCI 1 corresponds to satellite 1 and vPCI 2 corresponds to satellite 2.

In some embodiments of the present disclosure, in a case where one or more divided geographic regions correspond to one PCI, the method may further include:
transmitting a Primary Synchronization Signal (PSS) and a Secondary Synchronization Signal (SSS) corresponding to the divided geographic regions, for determining the PCI corresponding to the divided geographical regions by the terminal.

In practical applications, a PCI based on actual geographic region information (which may better address a scenario with rapid cell changes, such as the earth moving cell case, but is not limited to this scenario) may be implemented as follows. First, the ground (actual geographic regions) may be divided into regions. Each region or several regions may correspond to one PCI. The network side may send corresponding PSS/SSS according to the PCI division. Note: The PCI calculation formula is as follows: $N_{ID}^{cell} = 3N_{ID}^{(1)} + N_{ID}^{(2)}$ , where N(1)ID = Secondary Synchronization Signal (SSS), with a value range of {0, 1..., 335}; and N(2)ID = Primary Synchronization Signal (PSS), with a value range of {0,1,2}. Second, after moving into each region, the satellites connected to the same base station may forward the PSS/SSS corresponding to the region.

In some embodiments of the present disclosure, in a case where the network-side node is a Central Unit (CU), the method may further include:

controlling, by the CU, a same key; where a plurality of Distributed Units (DUs) connected to the same CU cover a corresponding same PCI; and

transmitting, by a first DU through forwarding via the CU or through a first interface configured between the DUs, a preset number of data-packet related information and stored data-packet information last sent by the first DU to a second DU;

where the first DU is a DU currently providing service for the terminal, and the second DU is a next DU to provide service for the terminal.

In the embodiments of the present disclosure, the first interface may be a newly added interface between the DUs. The first interface may be configured for data transmission between the DUs.

In practical applications, the embodiments of the present disclosure may be applicable to a regenerative architecture, such as a DU on-board scenario, while a gNB on-board scenario may be not applicable to the PCI unchanged scenario. In some embodiments, the key may refer to a key included in the encryption transmission process at the PDCP layer. The data packet may be a data packet transmitted (forwarded) between the DUs. Here, the reason for sending the data-packet related information of the last preset number (the last several data packets) and the stored data-packet information is that some data packets may not have been sent out by the first DU in time and are still in the buffer of the first DU, and such data packets also need to be forwarded. The last several sent data packets may be re-forwarded to the second DU. The retransmission by the second DU may be in order to ensure the success rate of data-packet transmission.

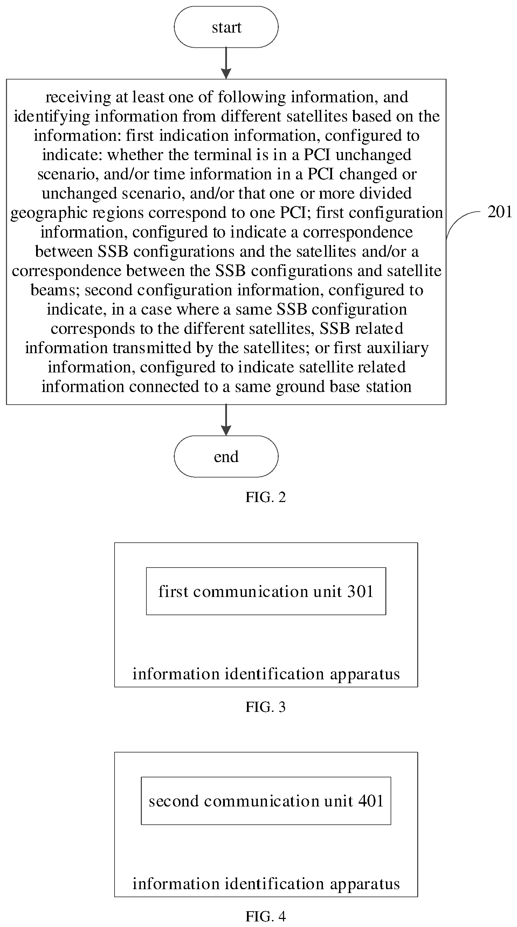

As shown in FIG. 2, the embodiments of the present disclosure further provide an information identification method applied to a terminal. The method includes:

The operation 201: receiving at least one of following information, and identifying information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;

first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

In practical applications, the terminal may be referred to as a UE or simply as a user. The embodiments of the present disclosure are applicable to PCI unchanged schemes in various scenarios (e.g., transparent forwarding architecture scenarios and regenerative architecture scenarios.

In the embodiments of the present disclosure, in a case where the terminal does not support a PCI unchanged function within a coverage area where the PCI remains unchanged, the method may further include:

receiving system information; where the system information carries a virtual PCI, and the virtual PCI is configured for identifying different satellites corresponding to a same PCI by the terminal not supporting the PCI unchanged function;

where the same PCI corresponds to a plurality of different virtual PCIs, and the plurality of different virtual PCIs correspond to the different satellites.

In the embodiments of the present disclosure, in a case where the terminal does not support a PCI unchanged function within a coverage area where the PCI remains unchanged, the method may further include:

in a case where the terminal loses communication connection with a first satellite, attempting to restore the connection through Beam Failure Recovery (BFR); and

detecting a second satellite corresponding to a same PCI as the first satellite, and re-accessing a network by the second satellite.

In practical applications, for a terminal not supporting the PCI unchanged function, after losing communication connection with the previous satellite (the first satellite), the terminal may attempt to restore the connection through Beam Failure Recovery (BFR), detect a satellite with the same PCI (which may actually correspond to a new satellite, e.g., the second satellite), and re-access the network.

In the embodiments of the present disclosure, in a case where the terminal does not support a PCI unchanged function within a coverage area where the PCI remains unchanged, the method may further include:

performing, by the terminal, a measurement operation after the terminal loses communication connection with a first satellite or before a service stop time of the first satellite times out; and
accessing, through cell selection or cell reselection, a second satellite corresponding to a same PCI as the first satellite.

In practical applications, for the terminal not supporting the PCI unchanged function, after losing communication connection with the previous satellite (the first satellite) or before the service stop time (t-service) of the first satellite times out, the terminal may perform the measurement operation and may access a new satellite (the second satellite) through cell selection or reselection.

In the embodiments of the present disclosure, in a case where the terminal does not support a PCI unchanged function within a coverage area where the PCI remains unchanged, the method may further include:
in a case where the terminal loses communication connection with a first satellite, accessing, by an intra-cell handover (intra-cell HO), a network corresponding to a second satellite that corresponds to a same PCI as the first satellite.

To implement the method for a network-side node according to the embodiments of the present disclosure, as shown in Fig. 3, the embodiments of the present disclosure further provide an information identification apparatus applied to a network-side node. The information identification apparatus may include:
a first communication unit 301, configured to transmit at least one of following information for identifying information from different satellites by a terminal:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;
second configuration information, configured to indicate, in a case where a same SSB configuration corresponds to the different satellites, SSB related information transmitted by the satellites; or
first auxiliary information, configured to indicate satellite related information connected to a same ground base station.

In the embodiments of the present disclosure, the first indication information may include at least one of following information:

an indication that the terminal is in the PCI unchanged scenario; or
a valid duration during which the terminal is in the PCI unchanged scenario.

In the embodiments of the present disclosure, the second configuration information may include a correspondence between the same SSB configuration and the different satellites. The second configuration information may further include at least one of following information:

a start time at which each of the satellites transmits a SSB;
a valid duration of the SSB;
a beam direction for transmitting the SSB; or
a configuration of an activated Bandwidth Part (BWP).

In the embodiments of the present disclosure, the first configuration information may include at least one of following information:

quantity information of the satellites connected to the same ground base station;
ephemeris information of the satellites connected to the same ground base station;
time information of the satellites connected to the same ground base station; or
beam information of the satellites connected to the same ground base station.

In the embodiments of the present disclosure, in a case where a number of terminals supporting a PCI unchanged function within a coverage area where the PCI remains unchanged is less than a threshold, the first communication unit 301 may be configured to:

transmitting system information; where the system information carries a virtual PCI, and the virtual PCI is configured for identifying different satellites corresponding to a same PCI by the terminals not supporting the PCI unchanged function;
where the same PCI corresponds to a plurality of different virtual PCIs, and the plurality of different virtual PCIs correspond to the different satellites.

In the embodiments of the present disclosure, in a case where one or more divided geographic regions correspond to one PCI, the first communication unit 301 may be further configured to:
transmit a PSS and a SSS corresponding to the divided geographic regions, for determining the PCI corresponding to the divided geographical regions by the terminal.

In the embodiments of the present disclosure, in a case where the network-side node is a Central Unit (CU), the first communication unit 301 may be configured to:

control a same key; where a plurality of DUs connected to the same CU cover a corresponding same PCI; and

transmit, by a first DU through forwarding via the CU or through a first interface configured between the DUs, a preset number of data-packet related information and stored data-packet information to the second DU last sent by the first DU to a second DU; where the first DU is a DU currently providing service for the terminal, and the second DU is a next DU to provide service for the terminal.

In practical applications, the first communication unit 301 may be implemented by a communication interface in the information identification apparatus.

It should be noted that, when the information identification apparatus provided in the above embodiments performs communication, the description is merely exemplary according to the division of the above program modules. In practical applications, the above processing may be allocated to be completed by different program modules as needed. That is, the internal structure of the apparatus may be divided into different program modules to complete all or part of the processing described above. In addition, the apparatus provided in the above embodiments and the method embodiments provided above share the same concept. The specific implementation process is detailed in the method embodiments, which will not be elaborated herein.

To implement the method for a terminal according to the embodiments of the present disclosure, as shown in Fig. 4, the embodiments of the present disclosure further provide an information identification apparatus applied to a terminal. The information identification apparatus may include:

a second communication unit 401, configured to receive at least one of following information and identify information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;

first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

In the embodiments of the present disclosure, in a case where the terminal does not support a PCI unchanged function within a coverage area where the PCI remains unchanged, the second communication unit 401 may be further configured to:

receive system information; where the system information carries a virtual PCI, and the virtual PCI is configured for identifying different satellites corresponding to a same PCI by the terminal not supporting the PCI unchanged function;

where the same PCI corresponds to a plurality of different virtual PCIs, and the plurality of different virtual PCIs correspond to the different satellites.

In the embodiments of the present disclosure, in a case where the terminal does not support a PCI unchanged function within a coverage area where the PCI remains unchanged, the second communication unit 401 may be further configured to:

in a case where the terminal loses communication connection with a first satellite, attempt to restore the connection through Beam Failure Recovery (BFR); and

detect a second satellite corresponding to a same PCI as the first satellite, and re-access a network by the second satellite.

In the embodiments of the present disclosure, in a case where the terminal does not support a PCI unchanged function within a coverage area where the PCI remains unchanged, the second communication unit 401 may be further configured to:

perform, by the terminal, a measurement operation after the terminal loses communication connection with a first satellite or before a service stop time of the first satellite times out; and

access, through cell selection or cell reselection, a second satellite corresponding to a same PCI as the first satellite.

In the embodiments of the present disclosure, in a case where the terminal does not support a PCI unchanged function within a coverage area where the PCI remains unchanged, the second communication unit 401 may be further configured to:

in a case where the terminal loses communication connection with a first satellite, access, by an intra-cell handover, a network corresponding to a second satellite that corresponds to a same PCI as the first satellite.

In practical applications, the second communication unit 401 may be implemented by a communication interface in the information identification apparatus.

It should be noted that, when the information identification apparatus provided in the above embodiments performs communication, the description is merely exemplary according to the division of the above program modules. In practical applications, the above processing may be allocated to be completed by different program modules as needed. That is, the internal structure of the apparatus may be divided into different program modules to complete all or part of the processing described above. In addition, the apparatus provided in the above embodiments and the method embodiments provided above share the same concept. The specific implementation process is detailed in the method embodiments, which will not be elaborated herein.

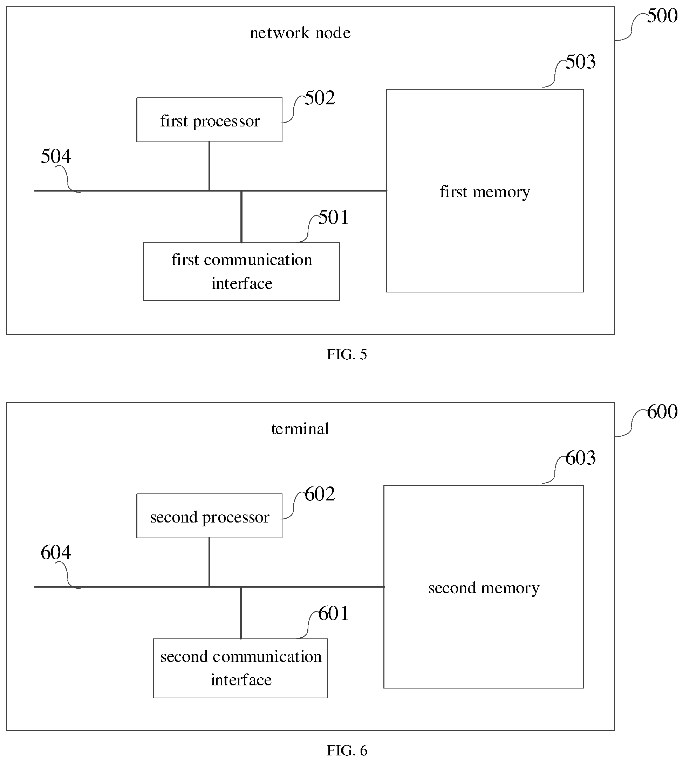

Based on the hardware implementation of the aforementioned program modules and to implement the method for a network-side according to the embodiments of the present disclosure, the embodiments of the present disclosure further provide a network node. As shown in Fig. 5, the network node 500 includes:

> a first communication interface 501, capable of performing information interaction with a terminal and/or other nodes on the network side;
> a first processor 502, connected to the first communication interface 501 to implement information interaction with the terminal and/or other nodes on the network side, and configured to execute the methods provided by one or more technical solutions for the aforementioned network node when the computer program is executed;
> a first memory 503, where the computer program is stored in the first memory 503.

In some embodiments, the first communication interface 501 may be configured to transmit at least one of following information for identifying information from different satellites by a terminal:

> first indication information, configured to indicate: whether the terminal is in a Physical Cell Identifier (PCI) unchanged scenario, and/or time information in a PCI changed or unchanged scenario, and/or that one or more divided geographic regions correspond to one PCI;
> first configuration information, configured to indicate a correspondence between Synchronization Signal and Physical Broadcast Channel (PBCH) Block (SSB) configurations and the satellites and/or a correspondence between the SSB configurations and satellite beams;
> second configuration information, configured to indicate, in a case where a same SSB configuration corresponds to the different satellites, SSB related information transmitted by the satellites; or
> first auxiliary information, configured to indicate satellite related information connected to a same ground base station.

In the embodiments of the present disclosure, the first indication information may include at least one of following information:

> an indication that the terminal is in the PCI unchanged scenario; or
> a valid duration during which the terminal is in the PCI unchanged scenario.

In the embodiments of the present disclosure, the second configuration information may include a correspondence between the same SSB configuration and the different satellites; and the second configuration information further includes at least one of following information:

> a start time at which the each of satellites transmits a SSB;
> a valid duration of the SSB;
> a beam direction for transmitting the SSB; or
> a configuration of an activated Bandwidth Part (BWP).

In some embodiments of the present disclosure, the first configuration information may include at least one of the following information:

> quantity information of the satellites connected to the same ground base station;
> ephemeris information of the satellites connected to the same ground base station;
> time information of the satellites connected to the same ground base station; or
> beam information of the satellites connected to the same ground base station.

In the embodiments of the present disclosure, in a case where a number of terminals supporting a PCI unchanged function within a coverage area where the PCI remains unchanged is less than a threshold, the first communication interface 501 may be configured to:

> transmit system information; where the system information carries a virtual PCI, and the virtual PCI is configured for identifying different satellites corresponding to a same PCI by the terminals not supporting the PCI unchanged function;
> where the same PCI corresponds to a plurality of different virtual PCIs, and the plurality of different virtual PCIs correspond to the different satellites.

In the embodiments of the present disclosure, in a case where one or more divided geographic regions correspond to one PCI, the first communication interface 501 may be configured to:
transmit a PSS and a SSS corresponding to the divided geographic regions, for determining the PCI corresponding to the divided geographical regions by the terminal.

In the embodiments of the present disclosure, in a case where the network-side node is a Central Unit (CU), the first communication interface 501 may be configured to:

control a same key; where a plurality of DUs connected to the same CU cover a corresponding same PCI; and
transmit, by a first DU through forwarding via the CU or through a first interface configured between the DUs, a preset number of data-packet related information and stored data-packet information to the second DU last sent by the first DU to a second DU; where the first DU is a DU currently providing service for the terminal, and the second DU is a next DU to provide service for the terminal.

It should be noted that, the specific processing procedures of the first communication interface 501 and the first processor 502 may be understood with reference to the aforementioned methods, which will not be elaborated herein.

Of course, in practical applications, the various components in the network node 500 may be coupled together via a bus system 504. It should be understood that the bus system 504 may be configured to implement connection and communication between these components. In addition to a data bus, the bus system 504 may further include a power bus, a control bus and a status signal bus. However, for clarity of description, all types of buses may be labeled as the bus system 504 in Fig. 5.

The first memory 503 in the embodiments of the present disclosure may be configured to store various types of data to support the operations of the network node 500. Examples of such data may include any computer program for operating on the network node 500.

The methods disclosed in the aforementioned embodiments of the present disclosure may be applied in the first processor 502 or implemented by the first processor 502. The first processor 502 may be an integrated circuit chip with signal processing capability. In the implementation process, each operation of the aforementioned methods may be accomplished through integrated logic circuits of hardware in the first processor 502 or through instructions in the software form. The aforementioned first processor 502 may be a general-purpose processor, a Digital Signal Processor (DSP), or other programmable logic devices, discrete gate or transistor logic devices, discrete hardware components, etc. The first processor 502 may implement or execute the various methods, operations and logic block diagrams disclosed in the embodiments of the present disclosure. The general-purpose processor may be a microprocessor or any conventional processor, etc. The operations combined with the methods disclosed in the embodiments of the present disclosure may be directly accomplished by the execution of a hardware decoding processor, or by a combination of hardware and software modules in the decoding processor. The software modules may reside in a storage medium. The storage medium may be disposed in the first memory 503. The first processor 502 may read information in the first memory 503 and complete the operations of the aforementioned methods in combination with its hardware.

In some exemplary embodiments, the network node 500 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, for executing the aforementioned methods.

Based on the hardware implementation of the aforementioned program modules and to implement the methods applied to a terminal side according to the embodiments of the present disclosure, the embodiments of the present disclosure further provide a terminal. As shown in Fig. 6, the terminal 600 includes:

a second communication interface 601, capable of performing information interaction with other nodes on the network side;
a second processor 602, connected to the second communication interface 601 to implement information interaction with other nodes on the network side, and configured to execute the methods provided by one or more technical solutions for the aforementioned terminal when the computer program is executed; and
a second memory 603, where the computer program is stored in the second memory 603.

In some embodiments, the second communication interface 601 may be configured to receive at least one of following information and identify information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;
second configuration information, configured to indicate, in a case where a same SSB configuration corresponds to the different satellites, SSB related information transmitted by the satellites; or
first auxiliary information, configured to indicate satellite related information connected to a same ground base station.

In the embodiments of the present disclosure, in a case where the terminal does not support a PCI unchanged function within a coverage area where the PCI remains unchanged, the second communication interface 601 may be further configured to:

receive system information; where the system information carries a virtual PCI, and the virtual PCI is configured for identifying different satellites corresponding to a same PCI by the terminal not supporting the PCI unchanged function;
where the same PCI corresponds to a plurality of different virtual PCIs, and the plurality of different virtual PCIs correspond to the different satellites.

In the embodiments of the present disclosure, in a case where the terminal does not support a PCI unchanged function within a coverage area where the PCI remains unchanged, the second communication interface 601 may be further configured to:

in a case where the terminal loses communication connection with a first satellite, attempt to restore the connection through Beam Failure Recovery (BFR); and
detect a second satellite corresponding to a same PCI as the first satellite, and re-access a network by the second satellite.

In the embodiments of the present disclosure, in a case where the terminal does not support a PCI unchanged function within a coverage area where the PCI remains unchanged, the second communication interface 601 may be further configured to:

perform, by the terminal, a measurement operation after the terminal loses communication connection with a first satellite or before a service stop time of the first satellite times out; and
access, through cell selection or cell reselection, a second satellite corresponding to a same PCI as the first satellite.

In the embodiments of the present disclosure, in a case where the terminal does not support a PCI unchanged function within a coverage area where the PCI remains unchanged, the second communication interface 601 may be further configured to:
in a case where the terminal loses communication connection with a first satellite, access, by an intra-cell handover, a network corresponding to a second satellite that corresponds to a same PCI as the first satellite.

It should be noted that, the specific processing procedures of the second communication interface 601 and the second processor 602 may be understood with reference to the aforementioned methods, which will not be elaborated herein.

Of course, in practical applications, the various components in the terminal 600 may be coupled together via a bus system 604. It should be understood that the bus system 604 may be configured to implement connection and communication between these components. In addition to a data bus, the bus system 604 may be further include a power bus, a control bus and a status signal bus. However, for clarity of description, all types of buses may be labeled as the bus system 604 in Fig. 6.

The second memory 603 in the embodiments of the present disclosure may be configured to store various types of data to support the operations of the terminal 600. Examples of such data may include any computer program for operating on the terminal 600.

The methods disclosed in the aforementioned embodiments of the present disclosure may be applied in the second processor 602 or implemented by the second processor 602. The second processor 602 may be an integrated circuit chip with signal processing capability. In the implementation process, each operation of the aforementioned methods may be accomplished through integrated logic circuits of hardware in the second processor 602 or through instructions in the software form. The aforementioned second processor 602 may be a general-purpose processor, a Digital Signal Processor (DSP), or other programmable logic devices, discrete gate or transistor logic devices, discrete hardware components, etc. The second processor 602 may implement or execute the various methods, operations and logic block diagrams disclosed in the embodiments of the present disclosure. The general-purpose processor may be a microprocessor or any conventional processor, etc. The operations combined with the methods disclosed in the embodiments of the present disclosure may be directly accomplished by the execution of a hardware decoding processor, or by a combination of hardware and software modules in the decoding processor. The software modules may reside in a storage medium. The storage medium may be disposed in the second memory 603. The second processor 602 may read information in the second memory 603 and complete the operations of the aforementioned methods in combination with its hardware.

In some exemplary embodiments, the terminal 600 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, for executing the aforementioned methods.

In some exemplary embodiments, the embodiments of the present disclosure may further provide a storage medium, i.e., a computer storage medium, specifically a computer-readable storage medium. For example, the computer-readable storage medium may include the first memory 503 storing a computer program. The above computer program may be executed by the first processor 502 of the network node 500 to accomplish the operations described in the aforementioned methods applied to the network-side node. For example, the computer-readable storage medium may include the second memory 603 storing a computer program. The above computer program may be executed by the second processor 602 of the terminal 600 to accomplish the operations described in the aforementioned methods applied to the terminal side. The computer-readable storage medium may be FRAM, ROM, PROM, EPROM, EEPROM, Flash Memory, magnetic surface memory, optical disc, or CD-ROM.

It should be noted that, the terms "first", "second" and so on, are configured to distinguish similar objects, and are not necessarily configured to describe a specific order or sequence.

In addition, the technical solutions described in the embodiments of the present disclosure may be combined arbitrarily with each other without conflict.

The above descriptions are merely some embodiments of the present disclosure, and are not configured to limit the protection scope of present disclosure.

**Claims**

1. An information identification method, applied to a network-side node, comprising:
transmitting at least one of following information for identifying information from different satellites by a terminal:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;
second configuration information, configured to indicate, in a case where a same SSB configuration corresponds to the different satellites, SSB related information transmitted by the satellites; or
first auxiliary information, configured to indicate satellite related information connected to a same ground base station.

2. The method as claimed in claim 1, wherein the first indication information comprises at least one of following information:

an indication that the terminal is in the PCI unchanged scenario; or
a valid duration during which the terminal is in the PCI unchanged scenario.

3. The method as claimed in claim 1 or 2, wherein the second configuration information comprises a correspondence between the same SSB configuration and the different satellites; and the second configuration information further comprises at least one of following information:

a start time at which each of the satellites transmits a SSB;
a valid duration of the SSB;
a beam direction for transmitting the SSB; or
a configuration of an activated Bandwidth Part (BWP).

4. The method as claimed in any one of claims 1 to 3, wherein the first configuration information comprises at least one of following information:

quantity information of the satellites connected to the same ground base station;
ephemeris information of the satellites connected to the same ground base station;
time information of the satellites connected to the same ground base station; or
beam information of the satellites connected to the same ground base station.

5. The method as claimed in any one of claims 1 to 4, wherein, in a case where a number of terminals supporting a PCI unchanged function within a coverage area where the PCI remains unchanged is less than a threshold, the method further comprises:

transmitting system information; wherein the system information carries a virtual PCI, and the virtual PCI is configured for identifying different satellites corresponding to a same PCI by the terminals not supporting the PCI unchanged function;
wherein the same PCI corresponds to a plurality of different virtual PCIs, and the plurality of different virtual PCIs correspond to the different satellites.

6. The method as claimed in any one of claims 1 to 5, wherein, in a case where one or more divided geographic regions correspond to one PCI, the method further comprises:
transmitting a Primary Synchronization Signal (PSS) and a Secondary Synchronization Signal (SSS) corresponding to the divided geographic regions, for determining the PCI corresponding to the divided geographical regions by the terminal.

**7.** The method as claimed in any one of claims 1 to 6, wherein, in a case where the network-side node is a Central Unit (CU), the method further comprises:

controlling, by the CU, a same key; wherein a plurality of Distributed Units (DUs) connected to the same CU cover a corresponding same PCI; and
transmitting, by a first DU through forwarding via the CU or through a first interface configured between the DUs, a preset number of data-packet related information and stored data-packet information last sent by the first DU to a second DU; wherein
the first DU is a DU currently providing service for the terminal, and the second DU is a next DU to provide service for the terminal.

**8.** An information identification method, applied to a terminal, comprising:
receiving at least one of following information, and identifying information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;
second configuration information, configured to indicate, in a case where a same SSB configuration corresponds to the different satellites, SSB related information transmitted by the satellites; or
first auxiliary information, configured to indicate satellite related information connected to a same ground base station.

**9.** The method as claimed in claim 8, wherein, in a case where the terminal does not support a PCI unchanged function within a coverage area where the PCI remains unchanged, the method further comprises:

receiving system information; wherein the system information carries a virtual PCI, and the virtual PCI is configured for identifying different satellites corresponding to a same PCI by the terminal not supporting the PCI unchanged function;
wherein the same PCI corresponds to a plurality of different virtual PCIs, and the plurality of different virtual PCIs correspond to the different satellites.

**10.** The method as claimed in claim 8, wherein, in a case where the terminal does not support a PCI unchanged function within a coverage area where the PCI remains unchanged, the method further comprises:

in a case where the terminal loses communication connection with a first satellite, attempting to restore the connection through Beam Failure Recovery (BFR); and
detecting a second satellite corresponding to a same PCI as the first satellite, and re-accessing a network by the second satellite.

**11.** The method as claimed in claim 8, wherein, in a case where the terminal does not support a PCI unchanged function within a coverage area where the PCI remains unchanged, the method further comprises:

performing, by the terminal, a measurement operation after the terminal loses communication connection with a first satellite or before a service stop time of the first satellite times out; and
accessing, through cell selection or cell reselection, a second satellite corresponding to a same PCI as the first satellite.

**12.** The method as claimed in claim 8, wherein, in a case where the terminal does not support a PCI unchanged function within a coverage area where the PCI remains unchanged, the method further comprises:
in a case where the terminal loses communication connection with a first satellite, accessing, by an intra-cell handover, a network corresponding to a second satellite that corresponds to a same PCI as the first satellite.

**13.** A network node, comprising: a first communication interface and a first processor; wherein
the first communication interface is configured to transmit at least one of following information for identifying information from different satellites by a terminal:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;
first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

14. A terminal, comprising: a second communication interface and a second processor; wherein
the second communication interface is configured to receive at least one of following information and identify information from different satellites based on the information:

first indication information, configured to indicate: whether the terminal is in a Physical Cell Identifier (PCI) unchanged scenario, and/or time information in a PCI changed or unchanged scenario, and/or that one or more divided geographic regions correspond to one PCI;

first configuration information, configured to indicate a correspondence between Synchronization Signal and Physical Broadcast Channel (PBCH) Block (SSB) configurations and the satellites and/or a correspondence between the SSB configurations and satellite beams;

second configuration information, configured to indicate, in a case where a same SSB configuration corresponds to the different satellites, SSB related information transmitted by the satellites; or

first auxiliary information, configured to indicate satellite related information connected to a same ground base station.

15. A network node, comprising: a first processor and a first memory configured to store a computer program executable on the processor;
wherein the first processor is configured to, when executing the computer program, perform operations of the method as claimed in any one of claims 1 to 7.

16. A terminal, comprising: a second processor and a second memory configured to store a computer program executable on the processor;
wherein the second processor is configured to, when executing the computer program, perform operations of the method as claimed in any one of claims 8 to 12.

17. A storage medium, storing a computer program, wherein, when the computer program is executed by a processor, the computer program implements operations of the method as claimed in any one of claims 1 to 7 or implements operations of the method as claimed in any one of claims 8 to 12.

18. A computer program product, wherein, when instructions in the computer program are executed by an electronic device, the method as claimed in any one of claims 1 to 7 or the method as claimed in any one of claims 8 to 12 is implemented.

19. A computer program, wherein, when the computer program is executed by a processor, the computer program implements the method as claimed in any one of claims 1 to 7 or the method as claimed in any one of claims 8 to 12.

```
        ┌─────────────┐
        │    start    │
        └──────┬──────┘
               │
               ▼
┌──────────────────────────────────────────┐
│  transmitting at least one of following   │
│  information for identifying information  │
│  from different satellites by a           │
│  terminal: first indication information,  │
│  configured to indicate: whether the      │
│  terminal is in a PCI unchanged           │
│  scenario, and/or time information in a   │
│  PCI changed or unchanged scenario,       │
│  and/or that one or more divided          │
│  geographic regions correspond to one     │
│  PCI; first configuration information,    │  ⟋ 101
│  configured to indicate a correspondence  │
│  between SSB configurations and the       │
│  satellites and/or a correspondence       │
│  between the SSB configurations and       │
│  satellite beams; second configuration    │
│  information, configured to indicate, in  │
│  a case where a same SSB configuration    │
│  corresponds to the different             │
│  satellites, SSB related information      │
│  transmitted by the satellites; or first  │
│  auxiliary information, configured to     │
│  indicate satellite related information   │
│  connected to a same ground base station  │
└──────────────────────┬───────────────────┘
                       │
                       ▼
                ┌─────────────┐
                │     end     │
                └─────────────┘
```

FIG. 1

start

receiving at least one of following information, and identifying information from different satellites based on the information: first indication information, configured to indicate: whether the terminal is in a PCI unchanged scenario, and/or time information in a PCI changed or unchanged scenario, and/or that one or more divided geographic regions correspond to one PCI; first configuration information, configured to indicate a correspondence between SSB configurations and the satellites and/or a correspondence between the SSB configurations and satellite beams; second configuration information, configured to indicate, in a case where a same SSB configuration corresponds to the different satellites, SSB related information transmitted by the satellites; or first auxiliary information, configured to indicate satellite related information connected to a same ground base station

201

end

FIG. 2

first communication unit 301

information identification apparatus

FIG. 3

second communication unit 401

information identification apparatus

FIG. 4

network node

~500

~503

first processor ~502

504

first memory

first communication interface ~501

FIG. 5

terminal

~600

~603

second processor ~602

604

second memory

second communication interface ~601

FIG. 6

## INTERNATIONAL SEARCH REPORT

| | International application No. |
|---|---|
| | **PCT/CN2024/118927** |

**A. CLASSIFICATION OF SUBJECT MATTER**

H04B 7/185(2006.01)i

According to International Patent Classification (IPC) or to both national classification and IPC

**B. FIELDS SEARCHED**

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, 3GPP: PCI, SSB, 变化, 卫星, 地面基站, 区分, 识别, 波束, 虚拟; vary, satellite, earth station, ground, distinguish, identify, beam, virtual

**C. DOCUMENTS CONSIDERED TO BE RELEVANT**

| Category* | Citation of document, with indication, where appropriate, of the relevant passages | Relevant to claim No. |
|---|---|---|
| X | WO 2023022502 A1 (SAMSUNG ELECTRONICS CO., LTD.) 23 February 2023 (2023-02-23) description, paragraphs 109-160, and figures 10a-15 | 1-4, 6, 8, 12-19 |
| X | CN 113475010 A (IDAC HOLDINGS, INC.) 01 October 2021 (2021-10-01) description, paragraphs 83-119, and figures 5-13 | 1-4, 6, 8, 12-19 |
| X | CN 112583463 A (HUAWEI TECHNOLOGIES CO., LTD.) 30 March 2021 (2021-03-30) description, paragraphs 53-80, and figures 1-9 | 1, 3, 8, 13-19 |
| A | KR 20230076118 A (ELECTRONICS AND TELECOMMUNICATIONS RESEARCH INSTITUTE) 31 May 2023 (2023-05-31) entire document | 1-19 |
| A | US 2021377825 A1 (IDAC HOLDINGS, INC.) 02 December 2021 (2021-12-02) entire document | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 November 2024** | **30 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/118927**

| Patent document cited in search report | | | Publication date (day/month/year) | Patent family member(s) | | | Publication date (day/month/year) |
|---|---|---|---|---|---|---|---|
| WO | 2023022502 | A1 | 23 February 2023 | EP | 4329389 | A1 | 28 February 2024 |
| | | | | KR | 20230027991 | A | 28 February 2023 |
| | | | | US | 2024298278 | A1 | 05 September 2024 |
| CN | 113475010 | A | 01 October 2021 | BR | 112021015545 | A2 | 05 October 2021 |
| | | | | US | 2022030532 | A1 | 27 January 2022 |
| | | | | US | 12133189 | B2 | 29 October 2024 |
| | | | | KR | 20210134620 | A | 10 November 2021 |
| | | | | WO | 2020163610 | A1 | 13 August 2020 |
| | | | | EP | 3921955 | A1 | 15 December 2021 |
| CN | 112583463 | A | 30 March 2021 | | None | | |
| KR | 20230076118 | A | 31 May 2023 | WO | 2023096356 | A1 | 01 June 2023 |
| US | 2021377825 | A1 | 02 December 2021 | EP | 3874780 | A1 | 08 September 2021 |
| | | | | EP | 3874780 | A4 | 03 August 2022 |
| | | | | WO | 2020092561 | A1 | 07 May 2020 |
| | | | | US | 2024056916 | A1 | 15 February 2024 |
| | | | | US | 12101673 | B2 | 24 September 2024 |
| | | | | KR | 20210095873 | A | 03 August 2021 |

Form PCT/ISA/210 (patent family annex) (July 2022)

**REFERENCES CITED IN THE DESCRIPTION**

**Patent documents cited in the description**

• CN 202311196958